Europäisches Patentamt

European Patent Office

Office européen des brevets

(19)

(11) Veröffentlichungsnummer : **0 097 729**
**B1**

(12) **EUROPÄISCHE PATENTSCHRIFT**

(45) Veröffentlichungstag der Patentschrift :
07.05.86

(21) Anmeldenummer : 82105613.2

(22) Anmeldetag : 25.06.82

(51) Int. Cl.⁴ : **A 21 C   7/01**, **B 65 G   41/00**,
**B 65 G   15/12**

(54) **Vorrichtung zum Rundwirken von Teig.**

(43) Veröffentlichungstag der Anmeldung :
**11.01.84 Patentblatt 84/02**

(45) Bekanntmachung des Hinweises auf die Patenterteilung : **07.05.86 Patentblatt 86/19**

(84) Benannte Vertragsstaaten :
**BE DE FR GB IT NL**

(56) Entgegenhaltungen :
**DE-C-   938 363**
**FR-A- 1 188 349**
**GB-A- 2 077 180**
**US-A- 2 086 160**
**US-A- 3 990 685**

(73) Patentinhaber : **A. Fritsch KG**
**Bahnhofstrasse 27-31**
**D-8711 Markt Einersheim (DE)**

(72) Erfinder : **Elgner, Rudolf**
**Sudetenstrasse 3**
**D-8711 Markt-Einersheim (DE)**

(74) Vertreter : **Patentanwälte Czowalla . Matschkur +**
**Partner**
**Dr.-Kurt-Schumacher-Strasse 23 Postfach 9109**
**D-8500 Nürnberg 11 (DE)**

## Beschreibung

Die Erfindung richtet sich auf eine Vorrichtung zum Rundwirken von Teig mit einem querschnittlich etwa V-förmigen offenen Wirkkanal, der von einem endlosen Grundwirkband und einem dazu gegenläufigen Wirkband begrenzt wird, welche Wirkbänder im Scheitelpunkt des Wirkkanals annähernd aneinanderstoßen, wobei das Wirkband um einen Schwenkpunkt im Bereich seines am Einlaufende des Grundwirkbandes angeordneten Endes zwischen einem Verlauf etwa parallel bis zu einem Verlauf etwa diagonal zu dem Grundwirkband schwenkbar gelagert ist.

Diese einen offenen Wirkkanal aufweisenden Vorrichtungen sind als Kegel- und Bandrundwirkvorrichtungen bekannt, bei denen eine feststehende ansteigende Wirkfläche mit einem umlaufenden Wirkkörper oder Wirkband derart zusammenarbeitet, daß das Teigstück an der laufenden Wirkfläche hochgearbeitet und zu einer Kugel mit einem Schluß gewirkt wird. Die laufende Wirkfläche tendiert jedoch dazu, das Teigstück, insbesondere wenn es aus einem weichen Teig besteht, unter der ansteigenden feststehenden Wirkfläche hindurchzuziehen. Deshalb sind solche Vorrichtungen nur begrenzt anwendbar.

Zur Verarbeitung von Weizen- und Weizenmischteigen finden beispielsweise Kegel- und Zylinderrundwirker Verwendung, während man sich zur Verarbeitung von Roggen- und Roggenmischteigen vornehmlich der Bandrundwirker bedient. Bei diesen letzteren werden die den V-förmig gestalteten Wirkkanal bildenden Wirkbänder mit unterschiedlicher Geschwindigkeit und gegenläufig angetrieben, wobei die Geschwindigkeitsdifferenz beider Bänder die Transportrichtung und Geschwindigkeit der Teigstücke bestimmt.

Die US-A-3 990 685 offenbart einen Rundwirker der eingangs bezeichneten Art mit zwei im Winkel gegeneinander angestellten Wirkbändern, denen das schräg über dem Grundwirkband verlaufende andere Wirkband um einen Schwenkpunkt am Einlaufende des Grundwirkbandes schwenkbar gelagert ist. Dadurch läßt sich mit der Veränderung des Anstellwinkels zwischen beiden Wirkbändern die Intensität der Einwirkung auf die Teigstücke variieren. Diese begrenzte Verstellmöglichkeit reicht jedoch nicht aus, um die verschiedensten Teigarten, die auf derartigen Rundwirken verarbeitet werden sollen, mit dem gleichen guten Erfolg verarbeiten zu können.

Die Vorrichtung nach DE-A-2 104 416 zeichnet sich durch einen querschnittlich etwa V-förmigen Trog aus zwei endlosen Wirkbändern und einen eine Trogseitenwange bildenden Wirkbalken aus, der in Richtung zum Trog hin Schiebebewegungen ausführt. Durch diese Ergänzung eignet sich der Bandrundwirker zwar für Weizen- und Weizenmischteige, er verliert jedoch seine Brauchbarkeit zur Verarbeitung von Roggen- und Roggenmischteigen, die nämlich eine verstärkte Anspannung der Oberhaut des Teigstücks nicht vertragen und infolgedessen aus einer solchen Bearbeitung rissig und brüchig hervorgehen.

Bei dem Zylinderrundwirker nach DE-C-915 443 besteht die Wirkvorrichtung aus einer kreisbogenförmig um eine Achse herumgelegte, zwischen zwei einander umschließenden Mantelflächen in Verbindung mit einem Boden gebildeten Wälzrinne, wobei die eine Mantelfläche mit dem Boden als Einheit umläuft und zusätzlich mehrere radial gerichtete Erweiterungen des wälzenden Querschnitts das Umkippen der zur wirkenden Teigstücke verhindern. Auch diese Vorrichtung eignet sich nur zur Verarbeitung von Weizen- oder Weizenmischteigen. Darüber hinaus läßt sie sich nur schwer an Teigstücke verschiedener Größe anpassen.

Insbesondere mittlere und Kleinbetriebe des Bäckerhandwerks benötigen zur Erzielung eines umfangreichen Warenangebots eine Wirkvorrichtung, die sich gleichermaßen gut zur Verarbeitung von Weizen- und Weizenmischteigen, wie Roggen- und Roggenmischteigen eignet und darüber hinaus noch problemlos in der Lage ist, Teigstücke verschiedener Größe in gleicher Güte einreihig und mehrreihig zu wirken. Die Erfindung geht hierbei von dem Prinzip eines Bandrundwirkers aus.

Zur Lösung der der Erfindung zugrundeliegenden Aufgabe ist bei einem Rundwirker der eingangs bezeichneten Gattung vorgesehen, daß das Grundwirkband um zwei in seiner Ebene im rechten Winkel zueinander liegende Achsen anstellbar gelagert ist und daß die Vorrichtung Antriebsmittel aufweist, durch die das schwenkbare Ende des Wirkbandes in der Schwenkebene in eine Schwingbewegung um den Schwenkpunkt versetzbar ist, wobei die Amplitude der Schwingbewegung verstellbar ist.

Durch diese verschiedenen Verstellmöglichkeiten läßt sich die von dem Wirkkanal auf das Teigstück ausgeübte Intensität der Wirkarbeit weitgehend dem jeweils zur Verarbeitung gelangenden Teig anpassen. Die Wirkintensität ist praktisch zwischen dem Wert 0 und ein Maximum zu verstellen, was die Verarbeitung reiner Roggenteige bis zu reinen Weizenteigen und von Teiggewichten von beispielsweise 30 g bis zu 1 500 g erlaubt.

In weiterer Ausgestaltung dieses Grundgedankens der Erfindung ist das Grundwirkband um eine Achse quer zu seiner Bewegungsrichtung um etwa 25-40° und um eine Achse längs zu seiner Bewegungsrichtung um etwa 10-20° stufenlos anstellbar angeordnet. Durch diese Verstellbarkeit wird in erster Linie die von den beiden den Wirkkanal bildenden umlaufenden Bändern auf das Teigstück ausgeübte Wirkung veränderbar gestaltet.

Es liegt im Rahmen dieses Gedankens, daß erfindungsgemäß das Grundwirkband entlang einer Seite an einer Grundplatte und diese um eine im Winkel hierzu verlaufende Seite am Rahmen der Vorrichtung schwenkbar anscharniert ist. Die Verschwenkung der Grundplatte einerseits und des Grundwirkbandes andererseits gegenüber der Grundplatte ergeben die verschiedenen Komponenten der seitlichen und in Längsrichtung gesehenen Steigung des Wirkkanals.

Es hat sich als besonders vorteilhaft erwiesen, die Anordnung so zu treffen, daß das Grundwirkband und/oder das Wirkband je einen stufenlos regelbaren Antrieb aufweisen, was die Anpassungsfähigkeit der Vorrichtung an die verschiedenen Teigarten und Größen der zu verarbeitenden Teigstücke noch wesentlich erweitert.

Die Vorrichtung ist durch einen das Grundwirkband übergreifenden Portalrahmen gekennzeichnet, an dem der Antrieb des Grundwirkbandes, sowie das Wirkband mit seinem Antrieb und schließlich der Schwingantrieb für das Wirkband angeordnet sind. Auf diese Weise läßt sich die Konstruktion mit einigen wenigen Elementen verwirklichen und unkompliziert sowie übersichtlich gestalten.

In weiterer Ausgestaltung der Erfindung ist das Wirkband höhenverstellbar und zur Veränderung des Öffnungswinkels des des Wirkkanals um seine Längsachse schwenkbar an dem Portalrahmen gelagert. Im Rahmen dieses Gedankens liegt die Weiterbildung in der Weise, daß die Ebene des Wirkbandes eine Verwindung aufweist und zwar derart, daß der Öffnungswinkel des Wirkkanals vom Einlaufende zum Auslaufende abnimmt. So kann der Öffnungswinkel sich stufenlos von etwa 90° am Einlaufende bis zu etwa 45° am Auslaufende verändern.

Ein weiteres Merkmal der Erfindung der Erfindung sieht vor, daß an der dem Grundwirkband zugekehrten Längsseite des Wirkbandes ein Abstreifer angeordnet ist, der bis über die Ebene des den Wirkkanal begrenzenden Bandtrums hinaus in den Wirkkanal verschiebbar gelagert ist. Die Verstellbarkeit dieser Abstreifleiste verändert den Querschnitt des Wirkkanals und paßt diesen damit an die jeweils zu verarbeitende Teigstückgröße an. In der maximalen Vorschubstellung des Abstreifers werden die größen Teigstücke, in der entgegengesetzten Stellung, wenn nämlich der Abstreifer über das Wirkband nicht mehr hinausragt, die kleinsten Teigstücke verarbeitet.

Das die Schwingbewegung ausführende Ende des Wirkbandes ist in einer am Portalrahmen angeordneten Gleitführung gelagert. Mit dieser Führung beschreibt das Wirkband eine hin- und hergehende Schwingbewegung in einer zur Ebene des Grundwirkbandes etwa parallelen Ebene um seinen Schwenkpunkt.

Dadurch, daß nach einem anderen Merkmal der Erfindung der Schwingantrieb in einer Führung des Portalrahmens quer zur Bewegungsrichtung des Grundwirkbandes verstellbar gelagert ist, kann der Schwingantrieb der Verstellbewegung des Wirkbandes über dem Grundwirkband folgen.

Der Schwingantrieb ist stufenlos regelbar und weist zum Zwecke der Antriebsübertragung auf das Wirkband eine diesem anliegende exzentrische Kurvenscheibe auf. Die Rückstellbewegung des Wirkbandes erfolgt zum einen unter der Wirkung der Schwerkraft durch die Schräganstellung des Wirkbandes mit dem Grundwirkband, darüber hinaus aber auch durch den vom zu bearbeitenden Teigstück ausgehenden Widerstand.

Der Amplitudenverstellung der Schwingbewegung dient im Rahmen der Erfindung ein deren Rückhub begrenzender verstellbarer Anschlag, der unmittelbar oder mittelbar an dem Portalrahmen gelagert sein kann.

Die erfindungsgemäße Vorrichtung kann sich mit einem Wirkband über dem Grundwirkband begnügen. Es ist jedoch durchaus möglich, daß mehrere im wesentlichen parallel angeordnete und analog ausgebildete Wirkbänder dem Grundwirkbank zugeordnet sind. Dadurch wird die Leistung der Vorrichtung jeweils vervielfacht.

Weitere Merkmale, Einzelheiten und Vorteile der Erfindung ergeben sich aus der folgenden Beschreibung einer bevorzugten Ausführungsform der Erfindung sowie anhand der Zeichnung. Hierbei zeigen :

Figur 1    eine Stirnansicht der Vorrichtung ;

Figur 2    eine Seitenansicht in Pfeilrichtung II in Fig. 1 ;

Figur 3    eine Draufsicht auf die Vorrichtung ;

Figur 4    in verkleinertem Maßstab die beiden den Wirkkanal bildenden Wirkbänder in Relation zueinander ;

Figur 5    einen Schnitt nach Linie V-V in Fig. 4 und

Figur 6    einen Schnitt nach Linie VI-VI in Fig. 4.

Auf einem Untergestell 1 der Vorrichtung ist die Grundplatte 2 gelagert, und zwar ist diese mittels eines an ihrer Schmalseite 3 angeordneten Scharniers 4 anstellbar gegenüber dem Untergestell 1 angebracht. Zur stufenlosen Verstellung dient die lediglich schematisch angedeutete Einrichtung 5, die sowohl einen Spindeltrieb aufweisen kann und damit von Hand betätigbar ist oder aber pneumatisch oder hydraulisch ausgeführt sein kann. Der Anstellwinkel α beträgt zwischen etwa 0 und 20°.

Auf der Grundplatte 2 ist das insgesamt mit 6 bezeichnete Grundwirkband angeordnet, und zwar ist es hierzu an seiner Längsseite 7 mit einem Scharnier 8 versehen. Zur Verstellung des Grundwirkbandes 6 gegenüber der Grundplatte 2 dient die Einrichtung 9, die sich einerseits an der Grundplatte 2 abstützt, und andererseits mit ihrem Kopf 10 an dem im einzelnen nicht wiedergegebenen Rahmen des Grundwirkbandes 6 angreift. Der Anstellwinkel β beträgt etwa 25-40°.

Das endlose Band dieses Grundwirkbandes 6 läuft in Pfeilrichtung 11 um. Zum Antrieb dient ein mit einem Übersetzungsgetriebe 12 versehender Motor 13. Dieser Antrieb ist stufenlos verstellbar.

Das Grundwirkband 6 wird von einem bei der dargestellten Ausführungsform doppelten Portalrahmen 14 überspannt, der mit dem Rahmen des Grundwirkbandes 6 fest verbunden ist. Dieser Rahmen 14 trägt zum einen den Antrieb 13, die Antriebseinrichtung 12, 13 für das Grundwirkband 6. Er trägt darüber hinaus noch das Wirkband 15, welches gemeinsam mit dem Grundwirkband 6 den Wirkkanal bildet, dessen Öffnungswinkel mit γ bezeichnet ist. Der Rahmen 16 des Wirkbandes 15 ist um die Gelenke 17 schwenkbar an einer Halterung 18 befestigt, die eine Höhenverstelleinrichtung aufweist und an einem Vierkant-Tragrohr 19 befestigt ist, das seinerseits an dem Portalrahmen 14 gelagert ist. Das eine Ende 20 der Trangstange 19 ist um die senkrecht auf dem Grundwirkband 6 stehende Achse 21 verschwenkbar, wie durch den Pfeil 22 angedeutet ist. Zur hin und hergehenden Schwingbewegung dieses Wirkbandes 15 dient ein Antriebsmotor 23 mit dem nachgeschalteten Getriebe 24, der eine exzentrische Kurvenscheibe 25 antreibt, die ihrerseits an der Vierkanttragstange 19 anliegt. Die der Anlage entgegengerichtete Gegenkraft ergibt sich aus der Schwerkraftwirkung des Wirkbandes 15 mit seiner Halterung und dem Widerstand der in dem Wirkkanal 26 zur Bearbeitung gelangenden Teigstücke. Allerdings wird der Rückhub der Schwingbewegung 22 durch einen Anschlag 27 begrenzt, der beispielsweise mittels eines Spindeltriebs 28 über das Handrad 29 stufenlos verstellbar ist.

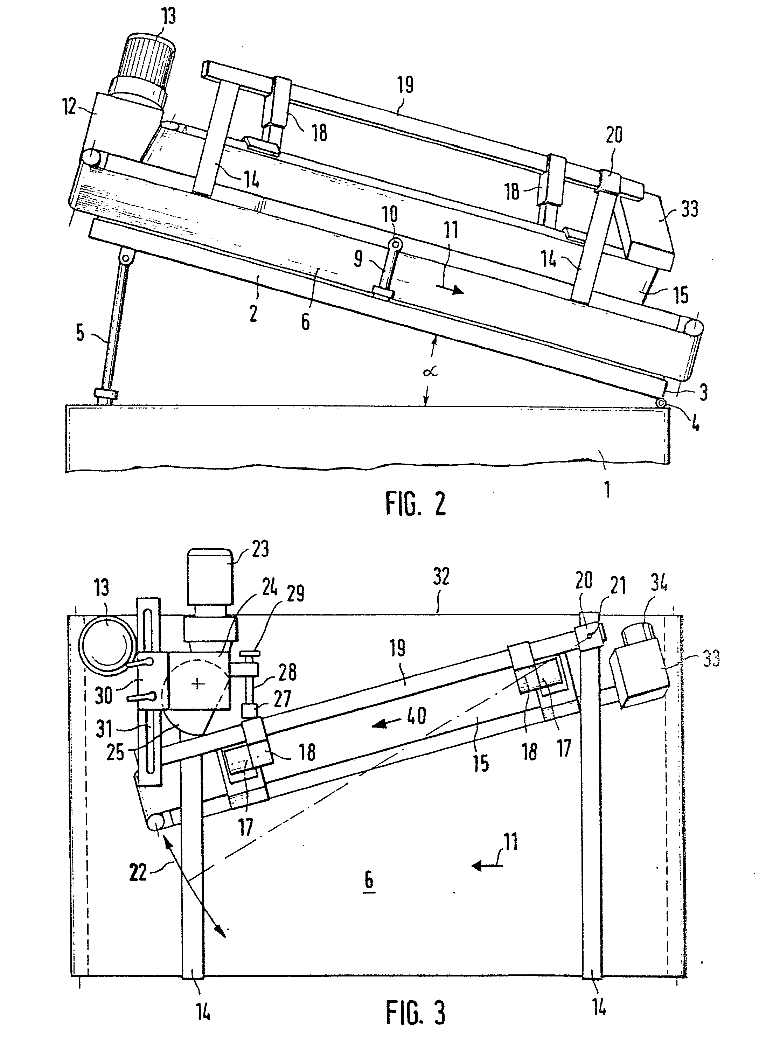

Der Antrieb 23, 24 ist an einer Tragplatte 30 gelagert, die in einer an dem Portalrahmen 14 angebrachten Führung 31 verschiebbar und feststellbar gelagert ist. Auf diese Weise kann das Wirkband 15 aus einer Lage etwa parallel zur Seitenkante 32 des Grundwirkbandes 6 bis zu einer Lage verschwenkt werden, in der es sich etwa diagonal über das Grundwirkband 6 erstreckt. Die Fig. 3 zeigt eine Zwischen-Verschwenkstellung des Wirkbandes 15. In der durch die Fixierung der Tragplatte 30 in der Gleitführung 31 fixierten Schwenkstellung des Wirkbandes 15 führt dieses die ihm von der Kurvenscheibe 25 erteilte Schwingbewegung in Pfeilrichtung 22 aus. Zum Antrieb des Wirkbandes 15 dient der mit einem Getriebe 33 versehene Motor 34.

Wie die Fig. 4, 5 und 6 erkennen lassen, weist der Rahmen des über dem Grundwirkband 6 angeordneten Wirkbandes 15 eine Verwindung auf, dadurch weist der Wirkkanal 26 im Bereich seines Einlaufendes (Schnitt V-V in Fig. 4) einen Winkel von etwa 90° auf, während er im Bereich seines Auslaufendes (Schnitt VI-VI in Fig. 4) einen Winkel γ von etwa 45° aufweist. Diese Verwindung des Wirkbandes 15 ist im allgemeinen für den jeweiligen Anwendungszweck der Vorrichtung vorgegeben und unveränderlich.

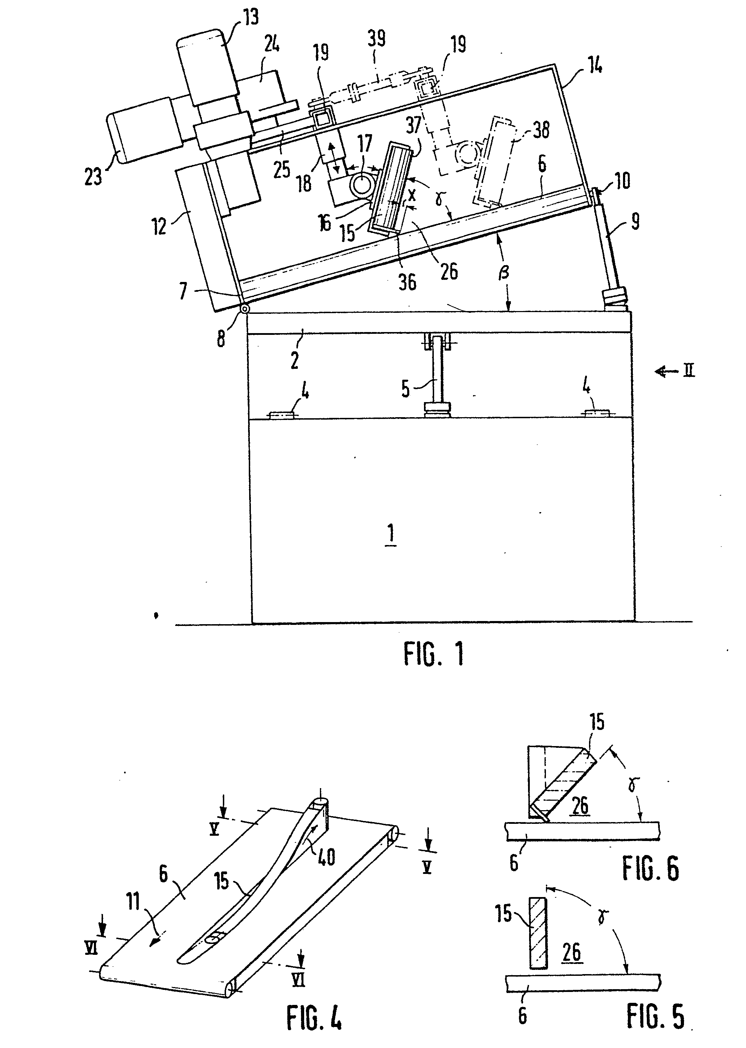

Das Wirkband 15 ist an seiner dem Grundwirkband 6 etwa anliegenden Schmalseite mit einem Abstreifer 36 versehen, der über die Ebene des den Wirkkanal 26 begrenzenden Trums 37 hinaus verstellbar ist. In Fig. 1 ist etwa die maximale Verstellung x dieses Abstreifers 36 wiedergegeben. Dadurch wird der Wirkkanal 26 in seiner Spitze abgestumpft und eignet sich somit besser zur Verarbeitung größerer Teigstücke. Ist der Abstreifer 36 hingegen zurückgezogen und liegt praktisch das Wirkband 15 unmittelbar dem Grundwirkband 6 an, ist der Wirkkanal 26 querschnittlich spitz zulaufend ausgebildet, wodurch er eine besondere Eignung zur Bearbeitung kleinerer Teigstücke erhält.

Die Beschreibung erfaßt eine Vorrichtung mit nur einem über einem Grundwirkband 6 angeordneten Wirkband 15. Es ist jedoch auch möglich, parallel zum Grundwirkband 15 eines oder mehrere weitere Wirkbänder 38 anzuordnen, die analog dem Grundwirkband 15 ausgebildet und an dem Portalrahmen 14 gelagert sind. Durch eine Koppelstange 39 sind die beiden Tragrohre 19 miteinander verbunden, so daß sie die gleiche vom Antrieb 23, 24, 25 ausgehende Schwingbewegung 22 ausführen.

Während das Grundwirkband 6 in Pfeilrichtung 11 umläuft, ist die Umlaufrichtung 40 des Wirkbandes 15 entgegengerichtet. Dadurch, daß das Grundwirkband 6 jedoch schneller umläuft als das Wirkband 15, werden die Teigstücke insgesamt im Wirkkanal 26 in Pfeilrichtung 11 bewegt.

## Patentansprüche

1. Vorrichtung zum Rundwirken von Teig mit einem querschnittlich etwa V-förmigen offenen Wirkkanal (26), der von einem endlosen Grundwirkband (6) und einem dazu gegenläufigen Wirkband (15) begrenzt wird, welche Wirkbänder (6, 15) im Scheitelpunkt des Wirkkanals (26) annähernd aneinanderstoßen, wobei das Wirkband (15) um einen Schwenkpunkt (21) im Bereich seines am Einlaufende des Grundwirkbandes (6) angeordneten Endes zwischen einem Verlauf etwa parallel bis zu einem Verlauf etwa diagonal zu dem Grundwirkband (6) schwenkbar gelagert ist, dadurch gekennzeichnet, daß das Grundwirkband (6) um zwei in seine γ Ebene im rechten Winkel zueinander liegende Achsen anstellbar gelagert ist, und daß die Vorrichtung Antriebsmittel aufweist, durch die das schwenkbare Ende des Wirkbandes (15) in der Schwenkebene in eine Schwingbewegung (22) um den Schwenkpunkt (21) versetzbar ist, wobei die Amplitude der Schwingbewegung verstellbar ist.

2. Vorrichtung nach Anspruch 1, dadurch gekennzeichnet, daß das Grundwirkband (6) um eine Achse (4) quer zur seiner Bewegungsrichtung (11) um etwa 25-40° und um eine Achse (8) längs seiner Bewegungsrichtung (11) um etwa 10-20° stufenlos anstellbar angeordnet ist.

3. Vorrichtung nach Anspruch 1 oder 2, dadurch gekennzeichnet, daß das Grundwirkband (6) entlang einer Seite (7) an einer Grundplatte (2) und diese um eine in Winkel hierzu verlaufende Seite (3) am Vorrichtungsrahmen (1) schwenkbar anscharniert ist.

4. Vorrichtung nach einem der Ansprüche 1 bis 3, dadurch gekennzeichnet, daß das Grundwirkband (6) und/oder das Wirkband (15) einen stufenlos regelbaren Antrieb (12, 13 ; 33, 34) aufweisen.

5. Vorrichtung nach einem der Ansprüche 1 bis 4, gekennzeichnet durch einen das Grundwirkband (6) übergreifenden Portalrahmen (14), an dem der Antrieb (12, 13) des Grundwirkbandes (6), das Wirkband (15) mit seinem Antrieb (33, 34) und die Antriebsmittel (23, 24, 25) für die Schwingbewegung (22) für das Wirkband (15) angeordnet sind.

6. Vorrichtung nach einem der Ansprüche 1 bis 5, dadurch gekennzeichnet, daß das Wirkband (15) höhenverstellbar und zur Veränderung des Öffnungswinkels γ des Wirkkanals (26) um seine Längsachse schwenkbar an dem Portalrahmen (14) gelagert ist.

7. Vorrichtung nach einem der Ansprüche 1 bis 6, dadurch gekennzeichnet, daß die Ebene des Wirkbandes (15) eine Verwindung aufweist und zwar derart, daß der Öffnungswinkel γ des Wirkkanals (26) vom Einlaufende zum Auslaufende abnimmt.

8. Vorrichtung nach einem der Ansprüche 1 bis 7, dadurch gekennzeichnet, daß an der dem Grundwirkband (6) zugekehrten Längsseite des Wirkbandes (15) ein Abstreifer (36) angeordnet ist, der bis über die Ebene des den Wirkkanal (36) begrenzenden Bandtrums (37) hinaus in dem Wirkkanal (26) verschiebbar gelagert ist.

9. Vorrichtung nach einem der Ansprüche 1 bis 8, dadurch gekennzeichnet, daß das die Schwingbewegung (22) ausführende Ende des Wirkbandes (15) in einer am Portalrahmen (14) angeordneten Gleitführung gelagert ist.

10. Vorrichtung nach einem der Ansprüche 1 bis 9, dadurch gekennzeichnet, daß der Schwingantrieb (23, 24) in einer Führung (31) des Portalrahmens (14) quer zur Bewegungsrichtung (11) des Grundwirkbandes (6) verstellbar gelagert ist.

11. Vorrichtung nach einem der Ansprüche 1 bis 10, dadurch gekennzeichnet, daß der Schwingantrieb (23, 24) stufenlos regelbar ist und eine dem Wirkband (15) anliegende exzentrische Kurvenscheibe (25) aufweist.

12. Vorrichtung nach einem der Ansprüche 1 bis 11, dadurch gekennzeichnet, daß ein den Rückhub der Schwingbewegung (22) des Wirkbandes (15) begrenzender verstellbarer Anschlag (27) vorgesehen ist.

13. Vorrichtung nach einem der Ansprüche 1 bis 12, dadurch gekennzeichnet, daß einem Grundwirkband (6) mehrere im wesentlichen parallel angeordnete analoge Wirkbänder (15, 38) zugeordnet sind.

**Claims**

1. Apparatus for kneading of dough with a sectional approx. V-shaped open kneading channel (26) which is limited by an endless basic kneading belt (6) and a thereto countercurrent kneading belt (15), said kneading belts (6, 15) almost contacting each other in the vertex of the kneading channel (26), the kneading belt (15) being carried swivelling around a swivelling point (21) in the range of its end arranged at the entering end of the basic kneading belt (6), between a course approximately parallel to a course approximately diagonal with regard to the basic kneading belt (6), characterized by the fact that the basic kneading belt (6) is supported adjustable around two axles situated in its plane rectangularly with respect to each other, and that the device has been equipped with driving means by which the swivelling end of the kneading belt (15) can be offset in the swivelling plane to realize a swivelling motion (22) around the swivelling point (21) — the amplitude of the swivelling motion being adjustable.

2. Apparatus in conformity with claim 1, characterized by the fact that the basic kneading belt (6) around an axle (4) and transversal with regard to its direction of movement (11) is arranged continuously adjustable by about 25-40° and around an axle (8) along its direction of movement (11) by about 10-20°.

3. Apparatus in conformity with claims 1 or 2, characterized by the fact that the basic kneading belt (6) along one side (7) is carried by a basic plate (2) and the latter being hinged swivelling at one side (3) running around an angle with regard to this side at the frame of the apparatus.

4. Apparatus in conformity with one of the claims 1 to 3, characterized by the fact that the basic kneading belt (6) and/or the kneading belt (15) have a continuously adjustable drive (12, 13 ; 33, 34).

5. Apparatus in conformity with one of the claims 1 to 4, characterized by the fact the basic kneading belt (6) has an overlapping portal frame (14) where are arranged the drive (12, 13) of the basic kneading belt, (6), the kneading belt (15) with its drive (33, 34) and the driving means (23, 24, 25) for the swinging motion (22) for the kneading belt (15).

6. Apparatus in conformity with one of the claims 1 to 5, characterized by the fact that the kneading belt (15) is adjustable in height and carried swivelling at the portal frame (14) to ensure the swivelling movement around its longitudinal axle, and for changing the opening angle γ of the kneading channel.

7. Apparatus in conformity with one of the claims 1 to 6, characterized by the fact that the plane of the kneading belt (15) shows a distorsion thus that the opening angle γ of the kneading channel (26) is tapered from the entering end to the discharge end.

8. Apparatus in conformity with one of the claims 1 to 7, characterized by the fact that at the longitudinal side of the kneading belt (15) turned to the basic kneading belt (6) a scrapper (36) has been provided which, exceeding the plane of the belt division (37), limiting the kneading channel (36) is carried sliding in the kneading channel (26).

9. Apparatus in conformity with one of the claims 1 to 8, characterized by the fact that the swinging movement (22) performed by the end of the kneading belt (15) is carried in a sliding rail provided at the portal frame (14).

10. Apparatus in conformity with one of the claims 1 to 9, characterized by the fact that the swinging drive (23, 24) is carried adjustable in a guide rail (31) of the portal frame (14) transversal with respect to the direction of movement (11) of the basic kneading belt (6).

11. Apparatus in conformity with one of the claims 1 to 10, characterized by the fact that the swinging drive (23, 24) is continuously adjustable and has an excentrical cam disk (25) sitting close to the kneading belt (15).

12. Apparatus in conformity with one of the claims 1 to 11, characterized by the fact that a limit stop (27) has been provided which is adjustable and limiting the return motion of the swinging motion (22) of the kneading belt (15).

13. Apparatus in conformity with one of the claims 1 to 12, characterized by the fact that there are coordinated with a basic kneading belt (6) several kneading belts (15, 38) which are analogous and essentially arranged in parallel.


## Revendications

1. Dispositif pour le pétrissage rond de pâte avec un canal de pétrissage ouvert (26) transversal à peu près sous forme de V, limité par une bande de base à pétrir sans fin (6) ainsi que par une bande à pétrir opposée (15), les bandes à pétrir (6, 15) se touchant quasiment au point de rebroussement du canal à pétrir (26), la bande à pétrir (15) étant logée pivotante autour d'un point pivotant (21) dans l'étendue de son bout prévu au bout d'entrée de la bande de base à pétrir (6), bout arrangé entre un cours quasi parallèle à quasi diagonal par égard à la bande de base à pétrir (6) ; caractérisé par le fait que la bande de base à pétrir (6) est logée réglable autour de deux axes formant un rectangle dans sa plaine, et que le dispositif est muni de moyens de commande par lesquels le bout pivotant de la bande à pétrir (15) peut être placée alternativement dans la plaine pivotante en réalisant un mouvement pivotant (22) autour du point pivotant (21), l'amplitude du mouvement pivotant étant réglable.

2. Dispositif conformément à la demande 1, caractérisé par le fait que la bande de base à pétrir (6) est arrangée réglable en continu autour d'un axe (4) transversal par rapport à sa direction de mouvement (11), de quasi 25-40° et autour d'un axe (8) longitudinal par rapport à sa direction de mouvement (11), de quasi 10-20°.

3. Dispositif conformément aux demandes 1 ou 2, caractérisé par le fait que la bande de base à pétrir (6) est fixée pivotante par charnière le long d'un côté (7) à une plaque de base (2), et que celle-ci présente un côté (3) au cadre du dispositif (1) en prenant une allure angulaire par rapport à celui-ci.

4. Dispositif conformément à une des demandes 1 à 3, caractérisé par le fait que la bande de base à pétrir (6) et/ou la bande à pétrir (15) ont une commande réglable en continu (12, 13, 33, 34).

5. Dispositif conformément à une des demandes 1 à 4, caractérisé par le fait qu'un cadre portique (14) recouvre la bande de base à pétrir (6), et qu'il y est arrangé la commande (12, 13) de la bande de base à pétrir (6), la bande à pétrir (15) avec sa commande (33, 34) et les moyens de commande (23, 24, 25) pour le mouvement oscillant (22) pour la bande à pétrir (15).

6. Dispositif conformément à une des demandes 1 à 5, caractérisé par le fait que la bande à pétrir (15) est réglable en hauteur et qu'elle est logée pivotante autour de son axe longitudinal au cadre portique pour changer son angle d'ouverture γ du canal à pétrir (26).

7. Dispositif conformément à une des demandes 1 à 6, caractérisé par le fait que la plaine de la bande à pétrir (15) montre une distorsion de manière à assurer que l'angle d'ouverture γ du canal à pétrir (26) se termine côniquement du bout d'entrée au bout de sortie.

8. Dispositif conformément à une des demandes 1 à 7, caractérisé par le fait qu'au côté tourné vers le côté longitudinal de la bande à pétrir (15) par rapport à la bande de base à pétrir (6), a été prévu un racloir (36) logé déplaçable jusqu'au-delà de la plaine du brin du ruban (37) limitant le canal à pétrir (26), le racloir étant à l'intérieur du canal à pétrir (26).

9. Dispositif conformément à une des demandes 1 à 8, caractérisé par le fait que le bout de la bande à pétrir (15) achevant le mouvement oscillant (22) est logé dans un guidage de glissement prévu au cadre portique (14).

10. Dispositif conformément à une des demandes 1 à 9, caractérisé par le fait que la commande d'oscillation (23, 24) est logée réglable dans un guidage (31) du cadre portique (14) transversale par rapport à la direction de mouvement (11) de la bande de base à pétrir (6).

11. Dispositif conformément à une des demandes 1 à 10, caractérisé par le fait que la commande d'oscillation (23, 24) est réglable en continu et qu'elle dispose d'un disque à came excentrique/s'approchant/(15) de la bande à pétrir (25).

12. Dispositif conformément à une des demandes 1 à 11, caractérisé par le fait qu'un arrêt réglable (27) a été prévu limitant la course de retour du mouvement oscillant (22) de la bande à pétrir (15).

13. Dispositif conformément à une des demandes 1 à 12, caractérisé par le fait qu'elles y ont été rattachées à une bande de base à pétrir (6) plusieurs bandes à pétrir analogues (15, 38) essentiellement arrangées en parallèle.

FIG. 1

FIG. 4

FIG. 6

FIG. 5

FIG. 2

FIG. 3

2